Europäisches Patentamt

European Patent Office

Office européen des brevets

(11) Publication number: **0 081 332**
**B1**

(12) EUROPEAN PATENT SPECIFICATION

(45) Date of publication of patent specification: **12.06.85**

(21) Application number: **82306353.2**

(22) Date of filing: **30.11.82**

(51) Int. Cl.⁴: **C 02 F 1/52, C 08 B 30/12**

(54) **Process for making starch flocculants of improved efficiency.**

(30) Priority: **07.12.81 US 327850**

(43) Date of publication of application:
**15.06.83 Bulletin 83/24**

(45) Publication of the grant of the patent:
**12.06.85 Bulletin 85/24**

(84) Designated Contracting States:
**BE DE FR GB IT NL**

(56) References cited:
**DE-A-2 558 204**
**GB-A- 116 620**
**GB-A- 516 294**
**GB-A- 525 796**
**US-A-2 362 409**
**US-A-4 289 540**

**CHEMICAL ABSTRACTS, vol. 77, no. 12, 18th
September 1972, page 113, no. 77031h,
Columbus Ohio (USA);**

(73) Proprietor: **Suncor Inc.**
**20 Eglinton Avenue East**
**Toronto Ontario M4R 1K8 (CA)**

(72) Inventor: **Yong, Raymond N.**
**212 Sherbrooke Street**
**Beaconsfield P.Q. H9W 1PS (CA)**
Inventor: **Sethi, Amar J.**
**191 Chestnut Street**
**Beaconsfield Quebec H9W 2S5 (CA)**

(74) Representative: **Lewin, John Harvey et al**
**Elkington and Fife High Holborn House**
**52/54 High Holborn**
**London WC1V 6SH (GB)**

Courier Press, Leamington Spa, England.

## Description

This invention relates to a novel hydrolyzed starch composition, particularly wheat, corn and potato starch compositions, and processes for making and using the same.

It is, of course, known to hydrolyze starch by the addition of various metal salts to starch dispersions. For example, US—A—3,977,897 (Wurzburg et al., issued August 31, 1978, Class 127/71) describes the heating at moderate temperature an an aqueous suspension of starch granules and an inorganic salt to obtain a non-chemically inhibited starch. GB—A—516,294 (Samuel et al. accepted Dec. 28, 1939) relates to starches modified with inorganic salts or other agents which are agitated in aqueous suspension at elevated temperature with a neutral hydrated metallic salt until a thick and gummy paste is obtained.

US—A—4,289,540 discloses a process of manufacturing a starch flocculant whereby starch, lime, aluminium sulphate and sodium phosphate are heated together. The order of mixing and addition of these reagents is not specifically disclosed.

In the present invention, however, an improved flocculating agent, particularly for sludge suspension, is obtained by heating an aqueous suspension of the starch admixed with lime and alum until maximum viscosity is obtained and then a metal salt, such as a phosphate salt, is added and hydrolysis effected.

More particularly; this invention relates to the discovery that hydrolyzed starches are a more effective flocculant in destabilizing dilute as well as thick sludge suspensions when the starch is hydrolyzed in a specific manner; e.g., by heating an aqueous dispersion comprising about 4 to about 12% starch solids, lime and alum until maximum viscosity is obtained, adding a metal salt and finally effecting hydrolysis by additional heating.

As a result of the process of the invention the hydrolyzed starch obtained provides a more rapid flocculation. The improved hydrolyzed starch is useful with any aqueous suspension which is to be flocculated, particularly aqueous colloidal suspensions containing either clay minerals or metal oxides-hydroxides which are formed in large volume during mining operations. These suspensions are known as slimes and are formed, typically as phosphate slimes or like materials produced in the mining of copper, nickel and titanium. Similarly, in coal and tar sands minings, the mining effluent typically contains dilute or thick clay mineral suspensions.

In order to properly dispose of these voluminous mining discharges, regardless of their source, flocculants have conventionally been employed to destabilize these suspensions and thus permit the effective separation of water from the solids.

In one particular aspect, this invention relates to the treatment of tailing pond water obtained from the hot water extraction process for treating bituminous sands, such as Athabasca tar sands, and, more particularly, to the treatment of the water and clay-containing effluent discharged from such a process with a hydrolyzed wheat, corn or potato starch.

Tar sands (which are also known as oil sands and bituminous sands) are sand deposits which are impregnated with dense, viscous petroleum. Tar sands are found throughout the world, often in the same geographical area as conventional petroleum. The largest deposit, and the only one of present commercial importance, is in the Athabasca area in the northeast section of the Province of Alberta, Canada. This deposit is believed to contain over 700 billion barrels of bitumen. For comparison, this is just about equal to the worldwide reserves of conventional oil, 60% of which is found in the middle east.

The processing of these tar sands has been described in detail in various publications and in Canadian Patent No. 1,124,895 and U.S. Patent No. 4,289,540 in the names of Raymond N. Young and Amar J. Sethi. The problems associated with tar sands extraction result primarily from the clay minerals content of the tar sands. In the hot water extraction process, most of the clays become dispersed in the process streams and traverse the circuit, exiting in the tailings. The amount of process water input is fixed by both the clay content of the feed and the need to control viscosity of the middlings stream and the amount of water required for middlings viscosity control represents a large volume relative to the volume of the ore itself. Upon disposal, clays settle only very, very slowly and thus the process water component of tailings is only partially available for reuse via recycle. That which cannot be recycled represents a net accumulation of tailings sludge.

The pond water problem makes it necessary to devise long-term economically and ecologically acceptable means to eliminate, minimize, or permanently dispose of the accumulation of liquid tailings or sludge.

Flocculation of the drag stream in order to improve the settling characteristics thereof has been proposed and practised in the prior art. In flocculation, individual particles (in this case clay particles) are united into rather loosely bound agglomerates or flocs. The degree of flocculation is controlled by the probability of collisions between the clay particles and their tendency toward adhesion after collision. Agitation increases the probability of collision and adhesion tendency is increased by the addition of flocculants.

As aforestated, the sludges being treated in accordance with this invention are aqueous colloidal suspensions containing either clay minerals or metal oxides-hydroxides which are formed during mining operations. For sake of illustration, and simplicity only, the following description will be directed to a colloidal clay suspension obtained from bituminous tar sands mining. However, it will be understood that this invention is directed generally to the destabilization of all such suspensions.

As aforementioned, the flocculant preferably is prepared from a wheat, corn or potato starch which has been hydrolyzed. The hydrolysis is achieved by first heating a mixture of the starch, lime and alum in the form of an aqueous suspension at about 80°C until maximum viscosity is achieved. This is readily done by measuring the viscosity during the heating step with a rotating type viscosimeter and when the increasing viscosity begins to fall, immediately adding an inorganic salt, e.g. a phosphate salt. After the salt is added, additional heating at about 95°C is effected and the mass is held on temperature for about one hour. The starch should be present in an amount of about 4 gm to about 12 gm per 100 ml of water, and preferably about 6 g. It has been found that when more than about 12 gm/100 ml is used proper mixing is not achieved.

The salt which is added at maximum viscosity will be in the amount of from about 50% of the stoichiometric to about a stoichiometric amount with respect to the lime $(Ca(OH)_2)$. An amount of about 65% of stoichiometric has been shown to be quite satisfactory and is preferred. The term "stoichiometric amount" means the amount of salt based on the amount of lime used which will produce the insoluble salt (i.e., $CaAlPO_4$ with trisodium phosphate, alum and lime). Preferably the lower amount will be used as this will give a very significant reduction in flocculation time. The amount of alum in the system will be from about 5% to about 15% by weight of the starch, the preferred amount being about 10%.

Among the salts which may be employed for this purpose are salts of metals such as sodium, potassium, ammonium, magnesium, calcium, and aluminium. The respective anions may be sulphates, acetates, chlorides, nitrates, chlorates, bromides, iodides, thiocyanates, phosphates and the like. Particularly effective for purposes of this invention, as applied to tar sands tailings ponds, is trisodium phosphate $(Na_3PO_4 \cdot 12H_2O)$.

In carrying out the above procedure, an insoluble salt is formed *in situ* as the starch mixture is mixed after the salt addition. Thus, for example, when the preferred trisodium phosphate is added at the point of maximum viscosity of the starch, lime and alum mixture, insoluble $CaAlPO_4$ is formed during the subsequent heating stage. This resulting salt should desirably be present in amounts of from about 10 to 30 grams per 100 grams of starch and preferably from 15 to 20 grams per 100 grams of starch.

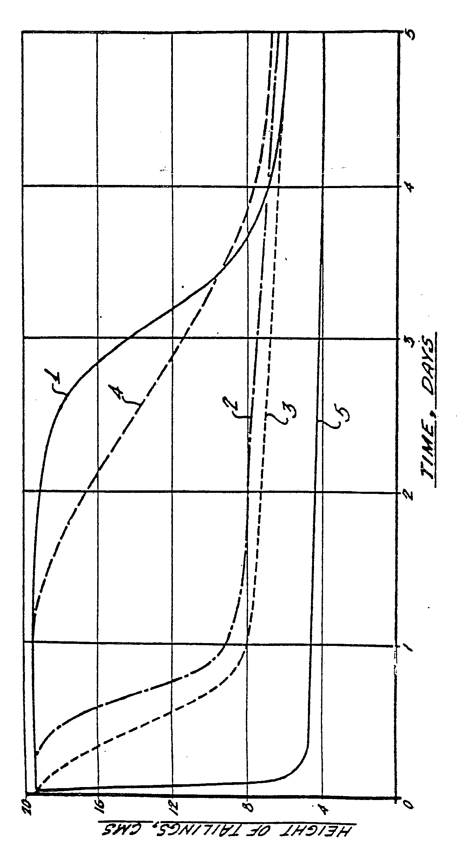

Reference is now made to the drawing where the experimental data with a wheat starch are given for various procedures. The curves shown give the settling time for tailings from pond water from Athabasca tar sands processing. In the test procedures used, the height of the tailings in graduated cylinders is observed before and after the dosage of 100 ppm of starch.

As can be seen from curve No. 1, when no flocculant is used, settlement of the tailings does not begin until about the second day and proceeds slowly for another one-half day before settlement accelerates.

Curve 2 shows the flocculation obtained when a trisodium phosphate salt is added in an amount stoichiometric to the lime at 20°C prior to heating. As can be seen, a significant beneficial effect on reducing settling time is obtained by this usual prior art technique.

Curve 3 illustrates the process of the invention whereby the trisodium phosphate salt is added in a stoichiometric amount at the point of maximum viscosity obtained by heating the starch, lime and alum mixture to about 80°C. In this case an improved flocculation is obtained as shown by the curve which shows no lag time in the start of settlement, and within about one day drops to about 40% of the original height and continues to settle slowly thereafter.

Curve 4 shows the result of using a large amount of the trisodium phosphate salt (150% of the stoichiometric amount of the lime) and it is seen that the beneficial effects of the flocculant are very significantly reduced.

Curve 5 shows the preferred process of the invention where about 65% of the stoichiometric amount of the trisodium phosphate salt based on the lime is used and here the curve shows not only an immediate settlement occurring, but also a reduction of the height to only about 25% of the initial height in about 6 hours.

## Claims

1. A process for making an improved starch flocculant, characterised in that an aqueous dispersion comprising starch, lime and alum containing from 4 to 12% by weight of solids concentration is heated until the dispersion reaches maximum viscosity, a metal salt is added in an amount of from 50% to 100% of the stoichiometric amount based on said lime, and hydrolysis is then effected by continued heating.

2. A process as claimed in Claim 1, wherein the dispersion is brought to about 80°C to effect maximum viscosity.

3. A process as claimed in Claim 1 or 2, wherein, after the salt is added, hydrolysis is effected by heating at about 95°C.

4. A process as claimed in any of Claims 1 to 3, wherein the salt added is trisodium phosphate.

5. A process as claimed in any of Claims 1 to 4, wherein the amount of salt added is about 65% of the stoichiometric amount.

6. A process as claimed in any of Claims 1 to 5, wherein the starch is a wheat starch, a potato starch or a corn starch.

7. A process for flocculating tailing pond water with hydrolyzed starch flocculant, characterised in that the starch flocculant has been obtained by a process as claimed in any of Claims 1 to 6.

## Patentansprüche

1. Verfahren zur Herstellung eines verbesserten Flockungsmittels auf Basis von Stärke, dadurch gekennzeichnet, daß eine wässrige Dispersion, die Stärke, Calciumhydroxid und Alaun enthält und eine Feststoffkonzentration von 4 bis 12 Gew.-% aufweist, erhitzt wird, bis die Dispersion ein Viskositätsmaximum erreicht, ein Metallsalz in einer Menge von 50 bis 100 % der stöchiometrischen Menge, bezogen auf das Calciumhydroxid, zugesetzt wird und dann durch fortgesetztes Erhitzen die Hydrolyse durchgeführt wird.

2. Verfahren nach Anspruch 1, bei dem die Dispersion auf etwa 80°C erhitzt wird, um ein Viskositätsmaximum zu erzielen.

3. Verfahren nach Anspruch 1 oder 2, bei dem nach der Zugabe des Salzes die Hydrolyse durch Erhitzen auf etwa 95°C vorgenommen wird.

4. Verfahren nach einem der Ansprüche 1 bis 3, bei dem das zugesetzte Salz Trinatriumphosphat ist.

5. Verfahren nach einem der Ansprüche 1 bis 4, bei dem die Menge des zugesetzten Salzes etwa 65 % der stöchiometrischen Menge beträgt.

6. Verfahren nach einem der Ansprüche 1 bis 5, bei dem die Stärke eine Weizenstärke, eine Kartoffelstärke oder eine Maisstärke ist.

7. Verfahren zum Ausflocken von Wasser in Rückstandsteichen mit Flockungsmittel auf Basis von hydrolysierter Stärke, dadurch gekennzeichnet, daß das Flockungsmittel auf Basis von Stärke mit Hilfe eines Verfahrens gemäß einem der Ansprüche 1 bis 6 erhalten worden ist.

**Revendications**

1. Procédé de fabrication d'un floculant à base d'amidon, caractérisé en ce qu'on chauffe une suspension aqueuse comprenant de l'amidon, de la chaux et de l'alun, à une concentration de 4 à 12% en poids de matières solides, jusqu'à ce que la dispersion atteigne la viscosité maximale, on ajoute un sel métallique à raison de 50% à 100% de la quantité stoechiométrique basée sur la chaux, et on effectue l'hydrolyse par poursuite du chauffage.

2. Procédé suivant la revendication 1, caractérisé en ce que la dispersion est portée à 80°C environ pour obtenir la viscosité maximale.

3. Procédé suivant la revendication 1 ou 2, caractérisé en ce que, après addition du sel, on effectue l'hydrolyse par chauffage à 95°C environ.

4. Procédé suivant l'une des revendications 1 à 3, caractérisé en ce que le sel ajouté est le phosphate trisodique.

5. Procédé suivant l'une des revendications 1 à 4, caractérisé en ce que la quantité de sel ajoutée est de 65% environ de la quantité stoechiométrique.

6. Procédé suivant l'une des revendications 1 à 5, caractérisé en ce que l'amidon est un amidon de blé, un amidon de pomme de terre ou un amidon de maïs.

7. Procédé de floculation de l'eau de lagunage de rejets de mine avec un floculant à base d'amidon hydrolysé, caractérisé en ce que le floculant à base d'amidon a été obtenu par un procédé suivant l'une quelconque des revendications 1 à 6.

HEIGHT OF TAILINGS, CMS

20

16

12

8

4

0

1

2

3

4

5

TIME, DAYS

1

4

2

3

5